Europäisches Patentamt

(19) European Patent Office

Office européen des brevets

(11) Publication number: **0 056 347**
**B1**

(12) **EUROPEAN PATENT SPECIFICATION**

(45) Date of publication of patent specification: **30.10.85**

(21) Application number: **82400034.3**

(22) Date of filing: **08.01.82**

(51) Int. Cl.⁴: **F 02 F 7/00,** **F 16 C 9/02,**
**F 16 M 1/02**

(54) Low noise level internal combustion engine.

(30) Priority: **12.01.81 JP 1749/81 u**

(43) Date of publication of application:
**21.07.82 Bulletin 82/29**

(45) Publication of the grant of the patent:
**30.10.85 Bulletin 85/44**

(84) Designated Contracting States:
**DE FR GB**

(56) References cited:
**DE-A-2 136 631**
**DE-C-1 268 901**
**FR-A-2 409 384**
**FR-A-2 455 182**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Kikuchi, Kazuhiro**
**No 1-26-16, Futamatagawa**
**Asahi-ku Yokohama City (JP)**
Inventor: **Ishibashi, Hideo**
**No 4351, Kamariya-cho**
**Kanazawa-ku Yokohama City (JP)**

(74) Representative: **Weinstein, Zinovi et al**
**Cabinet Z. WEINSTEIN 20, Avenue de Friedland**
**F-75008 Paris (FR)**

Courier Press, Leamington Spa, England.

## Description

This invention relates to a low noise level internal combustion engine, and more particularly to an improvement in an automotive internal combustion engine for the purpose of decreasing noise emitted from the engine.

In connection with prior art automotive internal combustion engines using a cylinder block of the so-called deep skirt type wherein a skirt section, forming thereinside a part of the crankshaft bearing structure, extends downwardly below the level of the axis of the crankshaft, the skirt section tends to readily vibrate laterally or in the inward and outward direction during engine operation, thereby emitting considerable noise. Additionally, the thus vibrated skirt section excites an oil pan which is securely connected to the bottom edge of the skirt section, to allow the oil pan to emit vibration noise. It was confirmed that such skirt section vibration was mainly originated from the vibration of bearing caps which are secured to bearing sections of main bearing bulkheads integral with the skirt section at a part located below the level of the crankshaft axis, said bulkheads including an upper part and a lower part located above and below said axis, respectively.

On the other hand, it is known from French patent publication N° 2 409 384 an internal combustion engine comprising an elastic element provided between each bearing cap and the crankshaft housing of the engine for damping noise emitted from the engine. More precisely, the elastic element is provided at each side thereof with a screwed pivot-pin, one of the pivot-pins being screwed within a protrusion integral with the bearing cap while the other pivot-pin is screwed within an adjusting device afixed to the housing of the engine. Meanwhile, the fixing structure of the elastic element is very complicated and is not suitable for an internal combustion engine using a cylinder block of the so-called deep skirt type.

The object of the present invention is to obviate to the inconveniences of the internal combustion engines using a cylinder block of the so-called deep skirt type and to propose a damping device of a very simple structure and which effectively decreases noise emitted from the engine.

Consequently, the present invention has for object an internal combustion engine comprising a cylinder block having a skirt section extending downwardly, a plurality of main bearing bulkheads integral with said skirt section, each bearing bulkhead being formed with the bearing section for rotatably receiving the journal of a crankshaft, said bearing bulkhead including an upper part located above the level of the axis of the crankshaft, and a lower part located below the level of the axis of the crankshaft and integrally connected to said skirt section at a part located below the level of the crankshaft axis; a main bearing cap sectionally connected to each bearing bulkhead for being associated with the bearing section of each bearing bulkhead so as to rotatably support the crankshaft journal; and a damping member made of a material which is of high damping capacity and oil- and heat-resistance, the damping member being disposed between the bearing bulkhead lower part and the bearing cap; and characterized in that the bearing bulkhead lower part is formed with a side surface which is opposite to a side surface of the bearing cap to define therebetween a slit within which said damping member is securely located.

The features and advantages of the internal combustion engine according to the present invention will be more clearly appreciated from the following description taken in conjunction with the accompanying drawings given by way of merely illustrative examples only, in which like reference numerals designate the corresponding parts and elements, and in which:

Figure 1 is a vertical sectional view of a lower part of a conventional automotive internal combustion engine.

Figure 2 is a perspective view of a model showing the vibrational state of each bearing bulkhead and its vicinity during their resonance vibration, in connection with the conventional engine.

Figure 3 is a vertical sectional view of a lower part of a presently preferred embodiment of an internal combustion engine according to the present invention.

Figure 4A is an enlarged sectional view taken in the direction of arrows substantially along the line 4—4 of Figure 3, showing the relationship between a damping member and its vicinity.

Figure 4B is an enlarged sectional view similar to Figure 4A, but showing another example of the relationship between the damping member and its vicinity.

Figure 5A is a wave form chart of the vibration of the bearing cap of the conventional engine of Figure 1.

Figure 5B is a wave form chart of the vibration of the bearing cap of the engine according to the present invention of Figure 3.

Figure 6 is a vertical sectional view of an essential part of another embodiment of the engine according to the present invention. And

Figure 7 is a vertical sectional view similar to Figure 6, but showing a further embodiment of the engine according to the present invention.

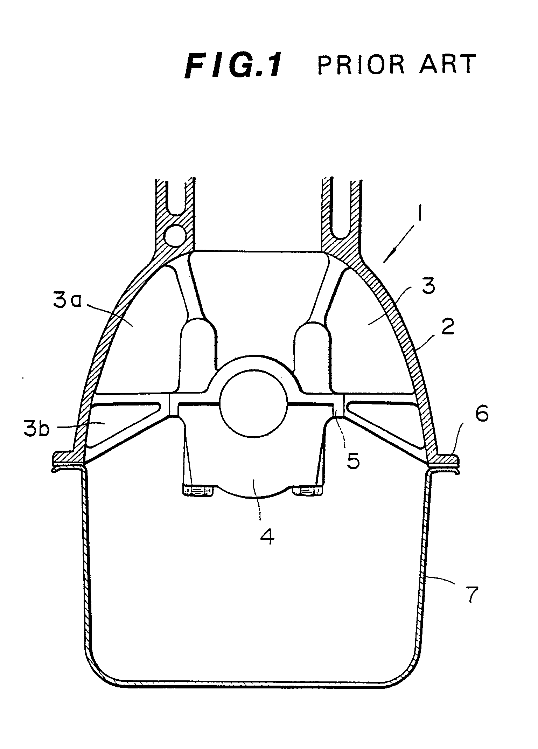

To facilitate understanding the present invention, a brief reference will be made to a conventional automotive internal combustion engine, depicted in Figure 1. Referring to Figure 1, the conventional engine includes a cylinder block 1 of the so-called deep skirt type wherein a skirt section 2 extends downwardly below the level of the axis of a crankshaft (not shown). The cylinder block 1 is provided with a plurality of main bearing bulkheads 3 which are integral with the inside walls of the skirt section 2. Each bearing bulkhead 3 is formed with a bearing section which associates with a bearing cap 4 so as to rotatably support the crankshaft journal therebetween. The bearing bulkhead 3 includes an upper part 3a located above the level of the crankshaft axis, and a lower part 3b located below the crankshaft axis level and integrally connected to the skirt section bottom part located below the crankshaft axis level. The bulkhead lower part 3b is usually called a "skirt truss part" and functions to diagonally connect the skirt section bottom part with a bulkhead bearing cap installation portion 5 to which the bearing cap 4 is secured. The skirt section bottom part is provided with a flange 6 to which an oil pan 7 is fixedly connected.

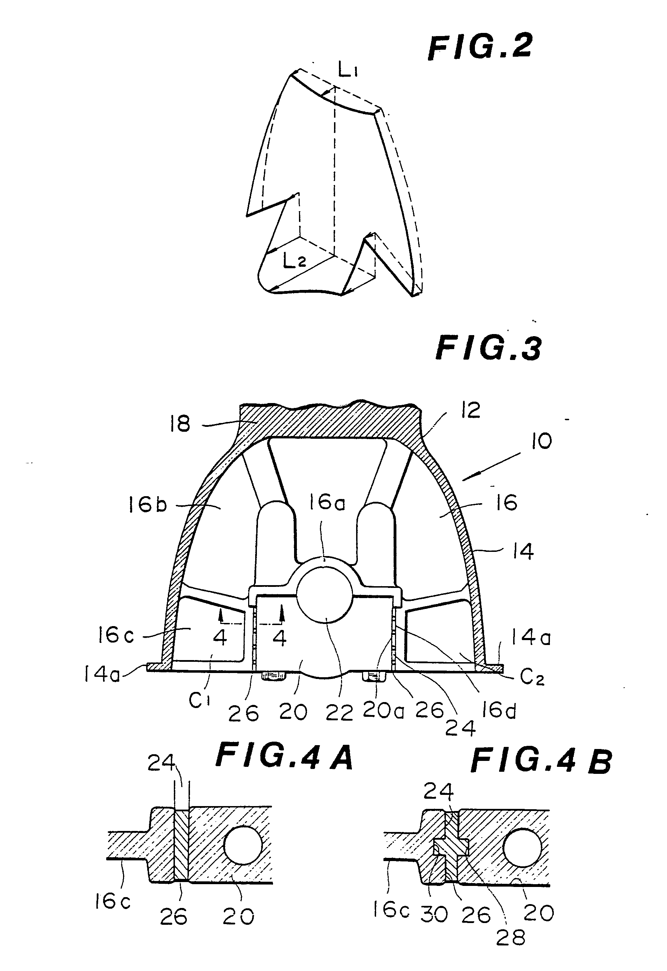

With the thus arranged conventional engine, the top section of the bearing cap 4 is rigidly secured to the bearing cap installation portion 5 which is in turn rigidly integrally connected at its top with a lower block deck and at its sides with the skirt section 3. Therefore, the bearing bulkhead 3 and the bearing cap top portion are prevented from their severe vibrating. However, the bottom section of the bearing cap 4 is free from any restraint and subsequently tends to cause resonance vibration which originates from the central part of the bearing cap bottom section. Considering a model shown in Figure 2, the bottom section of the model vibrates with a much higher amplitude $L_2$ than that $L_1$ of the top section thereof. Accordingly, each bearing cap readily vibrates in the forward and rearward direction, which causes the skirt section to be deformed so as to vibrate laterally or in the open-and-close direction. Thus, the skirt section 2 itself generates high level noise and additionally excites the oil pan 7, thereby causing the oil pan 7 to emit noise.

In view of the above description of the conventional automotive internal combustion engine arrangement, reference is now made to Figures 3 to 7, and more specifically to Figures 3 and 4A, wherein a presently preferred embodiment of an internal combustion engine according to the present invention is denoted by the reference numeral 10. The engine 10 is used, for example, for an automotive vehicle and comprises a cylinder block 12 which includes a skirt section 14. The skirt section 14 is as usual bulged laterally or outwardly and extends downward to define thereinside a space forming an upper part of a crankcase. A plurality of main bearing bulkheads 16 are located inside of the skirt section 14 and integrally connected at their side sections with the inner wall of the skirt section 14 and at their top section with a lower block deck 18.

Each bearing bulkhead 16 is formed with a bearing section or bearing cap installation section 16a to which a main bearing cap 20 is secured by means of bolts (without reference numerals) to define therebetween a bore 22 for rotatably receiving the journal of a crankshaft (not shown). The bearing bulkhead 16 includes an upper part 16b, and a lower part 16c. The upper part 16b is located above the level of the axis of the crankshaft or the axis of the bore 22, whereas the lower part 16c is located below the level of the crankshaft axis. As shown, the bearing bulkhead lower part 16c includes two counterparts $C_1$, $C_2$ which are located symmetrically to each other with respect to the main bearing cap 20 and the bore 22 so that the main bearing cap 20 is interposed between the two opposite counterparts $C_1$, $C_2$ of the bearing bulkhead lower part 16c. Each counterpart $C_1$, $C_2$ is integrally connected to the inner wall of the skirt section at the lower part which is considerably below the level of the axis of the crankshaft. In this regard, this cylinder block 12 is of the so-called deep skirt type.

Each counterpart $C_1$, $C_2$ is in the shape which is formed by inwardly and downwardly projecting a conventional "skirt truss part" in a manner to approach the main bearing cap 20. The counterpart $C_1$, $C_2$ of the bearing bulkhead lower part 16c is formed with a side surface 16d which is generally vertical and close to the vertical side surface 20a of the bearing cap 20 to form therebetween a slit 24. Disposed within the slit 24 is a damping member 26 made of a material which is of high damping capacity, such as oil- and heat-resisting rubber or the like. The damping member 26 is fixedly secured in position by any suitable means. In order to ensure the securing of the damping member 26 in position, the bearing cap 20 and the bearing bulkhead lower part 16c may be formed at respective side surfaces 20a, 16d with oppositely disposed vertical grooves 28, 30 which are entered by a part of the damping member 26 as clearly shown in Figure 4B. It will be understood that the damping member 26 may be previously stuck on either one of the bearing cap side surface 20a and the bearing bulkhead lower part vertical surface 16d by, for example, baking the damping member thereon. The damping member 26 may be made of foam metal. As shown in Figure 3, the skirt section 14 is provided at its bottom with oppositely disposed flanges 14a to which an oil pan (not shown) is fixedly attached.

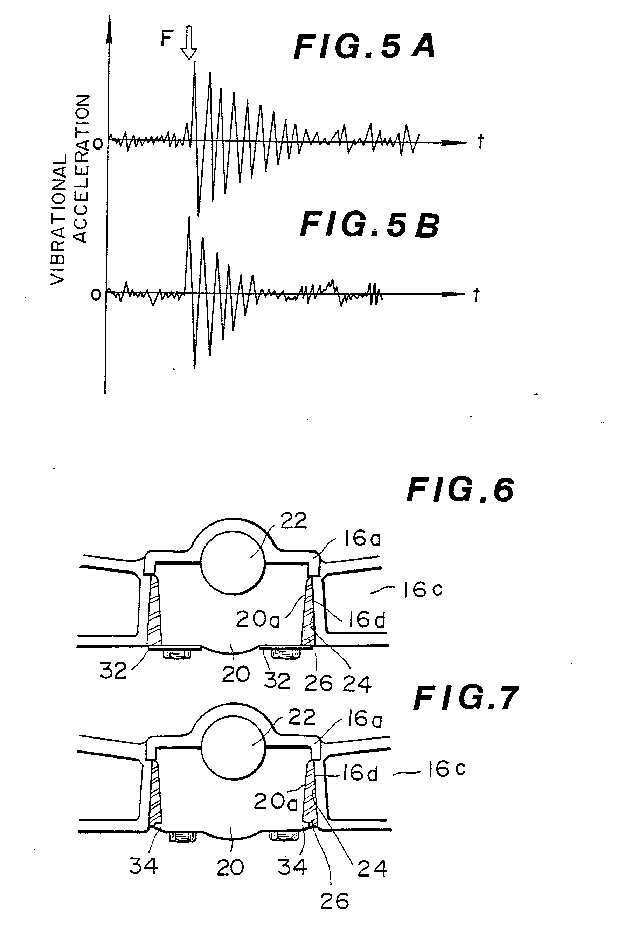

The advantageous effect of the present invention will be now discussed with reference to Figures 5A and 5B.

In case of the conventional engine arrangement shown in Figure 1, an impact force (indicated by an arrow F) due to combustion in engine cylinders is applied to the bearing cap 4; the resonance vibration of the bearing cap 4 occurs, thereby vibrating the skirt section 2. As shown, this resonance vibration of the bearing cap 4 is gradually damped under the damping action of the structure of the cylinder block and under the internal damping action of the material of the bearing bulkhead 3.

On the contrary, in case of the engine arrangement in accordance with the present invention, since the damping member 26 is interposed between the bearing bulkhead lower part 16c and the bearing cap 20, the vibration energy of the bearing cap 20 is converted into thermal energy in the damping member 26 by the relative displacement between the bearing cap 20 and the bearing bulkhead lower part 16c, so that the resonance vibration of the bearing bulkhead 16 is abruptly damped as shown in Figure 5B. At this stage, since a great damping is effected on the bearing cap 20 located at the bottom end of the bearing bulkhead 16 which bottom end is of higher vibration amplitude, the vibration of the bulkhead 16 as a whole is effectively damped. Accordingly, the vibration input level to the skirt section 14 is decreased to become lower, thereby lowering the vibration level of the skirt section 14. This decreases noise generation not only at the skirt section 14 itself but also at the oil pan due to the fact that the vibration input level to the oil pan is also lowered.

Figure 6 illustrates another embodiment of the engine according to the present invention, in which the slit 24 is formed to widen itself downwardly or in the vertical direction away from the level of the crankshaft axis in order to facilitate the insertion of the damping member 26 thereinto. The slit 24 of this shape is formed, for example, by inclining the opposite surfaces 16d, 20a of the bearing bulkhead lower part 16c and the bearing cap 20 relative to a vertical plane (not shown) containing the axes of the engine cylinders (not shown). In this case, the damping member 26 is supported by a support member 32 which serves also as a washer for the bolt for securing the bearing cap onto the bearing bulkhead 16, for the purpose of ensuring the support of the damping member in position.

Figure 7 shows a further embodiment of the engine according to the present invention which is similar to the embodiment of Figure 6 with the exception that the bearing cap 20 is provided at both respective opposite side surfaces thereof with two projections 34. Each projection 34 projects laterally and outwardly toward the bearing bulkhead lower part 16c. In this case, it will be understood that it is necessary to previously stick the damping member 26 to the bearing cap 20 or to the projection 34.

As appreciated from the above, according to the present invention, the damping member made of oil- and heat-resisting rubber or the like is inserted between the so-called skirt truss part and the bearing cap side, and therefore the forward-and-rearward vibration of the crankshaft bearing section is abruptly damped, thereby effectively lowering the open-and-close vibration of the cylinder block skirt section. This greatly contributes to noise reduction of the cylinder block skirt section and other covers connected to the cylinder block.

**Claims**

1. Internal combustion engine (10) comprising: a cylinder block (12) having a skirt section (14) extending downwardly, a plurality of main bearing bulkheads (16) integral with said skirt section, each bearing bulkhead (16) being formed with a bearing section (16a) for rotatably receiving the journal of a crankshaft, said bearing bulkhead including an upper part (16b) located above the level of the axis of the crankshaft, and a lower part (16c) located below the level of the axis of the crankshaft and integrally connected to said skirt section (14) at a part located below the level of the crankshaft axis; a main bearing cap (20) securely connected to each bearing bulkhead for being associated with the bearing section (16a) of each bearing bulkhead so as to rotatably support the crankshaft journal; and a damping member (26) made of a material which is of high damping capacity and oil- and heat-resistance, said damping member (26) being disposed between said bearing bulkhead lower part (16c) and said bearing cap (20); characterized in that said bearing bulkhead lower part (16c) is formed with a side surface (16d) which is opposite to a side surface (20a) of said bearing cap to define therebetween a slit (24) within which said damping member (26) is securely located.

2. Internal combustion engine according to claim 1, characterized in that said side surface (16d) of said bearing bulkhead lower part is generally parallel to the side surface (20a) of said bearing cap.

3. Internal combustion engine according to claim 1, characterized in that said side surface (16d) of said bearing bulkhead is inclined relative to said side surface of said bearing cap to define therebetween said slit (24) which widens itself in the downward and vertical direction.

4. Internal combustion engine according to claim 1, characterized in that said bearing bulkhead lower part (16c) and said bearing cap (20) are formed at said side surface (16d, 20a) thereof with opposite grooves (30, 28), respectively, into which the damping member (26) is insertable.

5. Internal combustion engine according to claim 3, characterized by further comprising a support member (32) which serves as a washer of a bolt for securing said bearing cap (20) onto said bearing bulkhead, said support member (32) being disposed between the bottom surface of said bearing cap and the head of said bolt, said support member (32) extending toward said bearing bulkhead lower part (16c) to support said damping member (26) within said slit (24).

6. Internal combustion engine according to claim 3, characterized in that said bearing cap (20) is formed at its side surface (20a) with a projection (34) extending toward said bearing bulkhead lower part (16c) to support said damping member (26) within said slit (24).

**Revendications**

1. Moteur à combustion interne (10) comprenant: un bloc-cylindres (12) comportant une section (14) formant jupe s'étendant vers le bas, une pluralité de cloisons transversales (16) solidaires de ladite jupe, chaque cloison de support (16) comportant une partie palier (16a) recevant le tourillon d'un vilebrequin, ladite cloison transversale de support comprenant une partie supérieure (16b) située au-dessus du niveau de l'axe du vilebrequin, et une partie inférieure (16c) située au-dessous du niveau de l'axe du vilebrequin et solidaires de ladite jupe (14) dans une zone située au-dessous du niveau de l'axe du vilebrequin; un chapeau (20) de palier du vilebrequin, solidement fixé à chaque cloison transversale de support de manière à coopérer avec la partie palier (16a) de chaque cloison de support pour supporter en rotation le tourillon de vilebrequin; et un élément amortisseur (26) constitué par un matériau ayant une haute capacité d'amortissement et une haute tenue à l'huile et à la chaleur, ledit élément amortisseur (26) étant disposé entre la partie inférieure (16c) de ladite cloison de support et ledit chapeau (20) de palier; caractérisé en ce que ladite partie inférieure (16c) de ladite cloison de support comporte une surface latérale (16d) en regard d'une surface latérale (20a) dudit chapeau de palier de manière à délimiter avec celui-ci une fente (24) dans laquelle ledit élément amortisseur (26) est solidement fixé.

2. Moteur à combustion interne conforme à la revendication 1, caractérisé en ce que ladite surface latérale (16d) de ladite partie inférieure de la cloison transversale de support est généralement parallèle à la surface latérale (20a) dudit chapeau de palier.

3. Moteur à combustion interne suivant la revendication 1, caractérisé en ce que ladite surface latérale (16d) de ladite closion de support est inclinée par rapport à ladite surface latérale dudit chapeau de palier de manière à délimiter avec celle-ci ladite fente (24), cette dernière allant en s'élargissant de haut en bas et dans la direction verticale.

4. Moteur à combustion interne conforme à la revendication 1, caractérisé en ce que ladite partie inférieure (16c) de la cloison transversale de support et ledit chapeau (20) de palier comportent à leurs surfaces latérales respectives (16d, 20a) des rainures (30 et 28), respectivement, dans lesquelles peut pénétrer l'élément amortisseur (26).

5. Moteur à combustion interne suivant la revendication 3, caractérisé en ce qu'il comprend en outre un organe de support (32) servant de rondelle pour une vis de fixation dudit chapeau (20) de palier sur ladite cloison transversale de support, ledit organe de support (32) étant disposé entre la surface inférieure dudit chapeau de palier et la tête de ladite vis, ledit organe de support (32) se prolongeant vers ladite partie inférieure (16c) de la cloison de support afin de maintenir ledit élément amortisseur (26) dans ladite fente (24).

6. Moteur à combustion interne conforme à la revendication 3, caractérisé en ce que ledit chapeau (20) de palier comporte à sa surface latérale (20a) une saillie (34) orientée vers ladite partie inférieure (16c) de la cloison de support de manière à supporter ledit élément amortisseur (26) dans ladite fente (24).

**Patentansprüche**

1. Brennkraftmaschine (10) mit: einem, einen abwärts verlaufenden Mantelteil (14) aufweisenden, Zylinderblock (12), einer Vielzahl von, mit dem besagten Mantelteil einstückigen, Hauptlagerschilder (16), wobei jedes Lagerschild (16) einen Lagerteil (16a) zur drehbaren Aufnahme des Kurbelwellenzapfens aufweist, wobei das besagte Lagerschild einen, oberhalb der Höhenlage der Mittellinie der Kurbelwelle liegenden, Oberteil (16b) und einen, unterhalb der Höhenlage der Mittellinie der Kurbelwelle liegenden und, mit dem besagten Mantelteil (14) in einem unterhalb der Höhenlage der Mittellinie der Kurbelwelle liegenden Bereich einstückig verbundenen, Unterteil (16c) umfasst; einem, mit jedem Lagerschild fest verbundenen, Hauptlagerdeckel (20), um dem Lagerteil (16a) jedes Lagerschildes zugeordnet zu sein, um den Kurbelwellenzapfen drehbar abzustützen; und einem, aus einem Werkstoff, der von grosser Dämpfungsfähigkeit und Öl-und Wärmebeständigkeit ist, hergestellten Dämpfungsglied (26), wobei das besagte Dämpfungsglied (26) zwischen dem besagten Lagerschildunterteil (16c) und dem besagten Lagerdeckel (20) angeordnet ist; dadurch gekennzeichnet, dass der besagte Lagerschildunterteil (16c) mit einer Seitenfläche (16d) ausgebildet ist, welche gegenüber einer Seitenfläche (20a) des besagten Lagerdeckels liegt, um dazwischen einen Spalt (24), in welchem das besagte Dämpfungsglied (26) fest angeordnet ist, zu bilden.

2. Brennkraftmaschine gemäss Anspruch 1, dadurch gekennzeichnet, dass die besagte Seitenfläche (16d) des besagten Lagerschildunterteiles mit der Seitenfläche (20a) des besagten Lagerdeckels im allgemeinen gleichgerichtet ist.

3. Brennkraftmaschine nach Anspruch 1, dadurch gekennzeichnet, dass die besagte Seitenfläche (16d) des besagten Lagerschildes gegenüber der besagten Seitenfläche des besagten Lagerdeckels geneigt ist, um dazwischen den besagten Spalt (24), der sich in der abwärts gerichteten bzw. senkrechten Richtung erweitert, zu bilden.

4. Brennkraftmaschine gemäss Anspruch 1, dadurch gekennzeichnet, dass der besagte Lagerschildunterteil (16c) und der besagte Lagerdeckel (20) an deren besagten Seitenfläche (16d, 20a) jeweils mit gegenüber liegenden Nuten (30, 28), in welche das Dämpfungsglied (26) einsetzbar ist, ausgebildet sind.

5. Brennkraftmaschine nach Anspruch 3, dadurch gekennzeichnet, dass sie weiter ein Tragstück (32) umfasst, das als Unterlegscheibe eines Bolzens zur Befestigung des besagten Lagerdeckels (20) an dem besagten Lagerschild dient, wobei das besagte Tragstück (32) zwischen der Unterfläche des besagten Lagerdeckels und dem Kopf des besagten Bolzens angeordnet ist, wobei dieses Tragstück (32) sich zu dem besagten Lagerschildunterteil (16c) hin erstreckt, um das besagte Dämpfungsglied (26) innerhalb des besagten Spaltes (24) zu tragen.

6. Brennkraftmaschine gemäss Anspruch 3, dadurch gekennzeichnet, dass der besagte Lagerdeckel (20) an seiner Seitenfläche (20a) mit einem sich zum besagten Lagerschildunterteil (16c) hin erstreckenden Ansatz (34) ausgebildet ist, um das besagte Dämpfungsglied (26) innerhalb des besagten Spaltes (24) abzustützen.

## FIG.1 PRIOR ART

# FIG.2

$L_1$

$L_2$

# FIG.3

18

12

10

16b

16a

16

14

16c

4     4

14a

16c

14a

C₁   26   20   22   20a   26   16d

C₂

24

# FIG.4 A

24

16c   26   20

# FIG.4 B

24

16c   30   26   20

28

2

FIG. 5 A

FIG. 5 B

VIBRATIONAL ACCELERATION

FIG. 6

FIG. 7